# FASCICULE DE BREVET EUROPEEN

(11) **EP 1 867 784 B1**
(45) Date de publication et mention de la délivrance du brevet: **04.03.2020**
(21) Numéro de dépôt: 07290722.3
(22) Date de dépôt: 11.06.2007
(51) Int. Cl.: E01C 19/10, B01D 53/14

(54) **Procédé et dispositif de fabrication d'enrobés incluant un traitement de dégagements gazeux, ainsi que poste de traitement de dégagements gazeux**
Verfahren und Vorrichtung zur Herstellung von Mischgut inklusive Abgasbehandlung, und Vorrichtung zur Abgasbehandlung
Method and device for manufacturing coated aggregates including gas treatment, as well as device for gas treatment

(30) Priorité: 12.06.2006 FR 0605197
(43) Date de publication de la demande: 19.12.2007
(73) Titulaire: Eiffage Travaux Publics, 93330 Neuilly Sur Marne (FR)
(72) Inventeur: Pigeon, Joël, 13090 Aix en Provence (FR); Louchart, Gérard, 62690 Izel les Hameaux (FR); Le Noan, Claude, 91300 Massy (FR); Turban, Dany, 62760 Pommera (FR)
(74) Mandataire: Plaçais, Jean Yves

(56) Documents cités:
- EP-A- 1 469 038
- DE-U- 1 749 554
- FR-A- 2 625 758
- US-A- 3 448 562
- US-A- 4 245 915
- US-A- 5 083 870

## Description

L'invention concerne un procédé ainsi qu'un dispositif pour fabriquer des enrobés, et plus particulièrement des enrobés comprenant des fragments solides enrobés d'un liant.

Par "fragments solides", on entend ici tous fragments solides utilisables pour la réalisation d'enrobés, en particulier pour la construction routière, comprenant notamment les granulats minéraux naturels.

On entend par "liant" tout liant hydrocarboné d'origine fossile ou végétale utilisable pour la réalisation d'enrobés, notamment du bitume pur ou additionné de fluxants et/ou de fluidifiants et/ou modifié par adjonction de polymères, ce liant pouvant éventuellement se présenter sous la forme d'une émulsion ou d'une mousse. Le liant peut être humide, par exemple dans le cas d'une émulsion ou de certaines mousses, ou encore anhydre.

Des enrobés de ce type sont, par exemple, utilisés pour réaliser différentes couches de voies de circulation automobile, de trottoirs ou encore de chapes.

Les procédés classiques de fabrication de ces enrobés consistent à mélanger les fragments solides au liant à une température au moins égale à 140°C. Les enrobés ainsi obtenus sont généralement désignés "enrobés à chaud". Le mélange est le plus souvent réalisé dans un poste de malaxage, ou malaxeur, agitant et mélangeant les différents ingrédients.

Avec le temps, est apparu le besoin de réaliser des enrobés à plus faible température, en particulier pour des raisons énergétiques (économie d'énergie) et d'environnement (à plus faible température, moins de produits organiques volatiles sont dégagés). Les enrobés obtenus sont généralement désignés "enrobés tièdes".

EP 1 469 038 décrit par exemple un procédé de fabrication d'un enrobé tiède.

De nombreux procédés de fabrication d'enrobés, en particulier d'enrobés tièdes, ont lieu en présence d'eau. Par exemple, les fragments solides peuvent contenir de l'eau "résiduelle", c'est-à-dire qu'ils peuvent être légèrement humides, et ce malgré un séchage préalable (on parle alors de "séchage partiel"). De l'eau sous forme liquide, à proprement parler, peut aussi être injectée, en particulier lors de l'étape de malaxage et/ou d'enrobage. Dans d'autres cas encore, l'adjonction d'un ingrédient (fragment solide ou liant) humide, c'est-à-dire contenant de l'eau liée chimiquement ou physiquement, réalise un apport d'eau.

Il se forme alors immanquablement de la vapeur d'eau, dans laquelle des poussières, ou fines, et/ou des particules gazeuses sont en suspension.

Cette vapeur doit être traitée pour des raisons évidentes de respect de l'environnement.

Au cours du cycle de fabrication d'enrobés à chaud, il est de plus en plus fréquent d'incorporer, en tant que fragments solides, une quantité de matériaux recyclés, en particulier des enrobés usagés, à température ambiante et présentant une humidité "naturelle" (c'est-à-dire qu'il n'est pas réalisé de séchage de ces matériaux qui ont pu à un moment donné se charger d'eau, par exemple lors de leur stockage à l'air libre ou de leur utilisation). Le phénomène de formation de vapeur d'eau chargée de poussières et/ou de particules gazeuses en suspension se pose alors de la même façon.

Outre le phénomène de formation de vapeur, il se produit fréquemment, en particulier lors de la fabrication d'enrobés à chaud, des dégagement gazeux du fait du chauffage des produits. Et ces dégagement gazeux doivent être eux aussi traités pour les mêmes raisons évidentes de respect de l'environnement.

Dans le cas d'enrobés à chauds, il est courant de prévoir des systèmes de filtration des gaz de combustion servant au séchage des fragments solides. Et ces systèmes sont utilisés pour l'assainissement de la vapeur et/ou des dégagements gazeux. Ces systèmes ne sont pourtant pas complètement satisfaisants. En particulier, des substances néfastes peuvent encore être libérées malgré les filtres.

DE 1 749 554 U décrit un poste de traitement de dégagements gazeux pour dispositif de fabrication d'enrobés, permettant une séparation des dégagements gazeux en une fraction gazeuse et une fraction de substances en suspension par mise en contact des dégagements gazeux avec un liquide de lavage.

En outre, en dessous du point de rosée, la vapeur chargée peut se condenser sur toute paroi, provoquant ainsi des dépôts de boue. Les systèmes d'assainissement classiques sont prévus pour transférer des gaz au-dessus de leur point de rosée et sont par conséquent insuffisant ou inadaptés à la fabrication d'enrobés tièdes et à celle d'enrobés chaud lorsqu'il se forme de la vapeur à une température proche du point de rosée.

L'invention a donc pour but de proposer un procédé ainsi qu'un dispositif permettant l'assainissement des dégagements gazeux formés lors de la fabrication d'un enrobé.

L'invention prévoit ainsi un procédé pour fabriquer un enrobé selon la revendication 1.

L'invention propose en outre un dispositif pour fabriquer un enrobé selon la revendication 14.

Ainsi, la fabrication des enrobés, en particulier tièdes et à chaud, ne nuit pas à l'environnement. En outre, il n'y a pas d'encrassement du dispositif de fabrication en sorte que cette fabrication est facilitée.

L'invention propose enfin un poste de traitement de dégagements gazeux selon la revendication 20.

D'autres caractéristiques et avantages de l'invention apparaîtront à la lecture de la description détaillée ci-après, et des dessins sur lesquels :
- la figure 1 représente schématiquement un dispositif de fabrication d'enrobés selon l'invention, et
- la figure 2 détaille une partie de ce dispositif

Les dessins annexés pourront, non seulement servir à compléter l'invention, mais aussi contribuer à sa définition, le cas échéant.

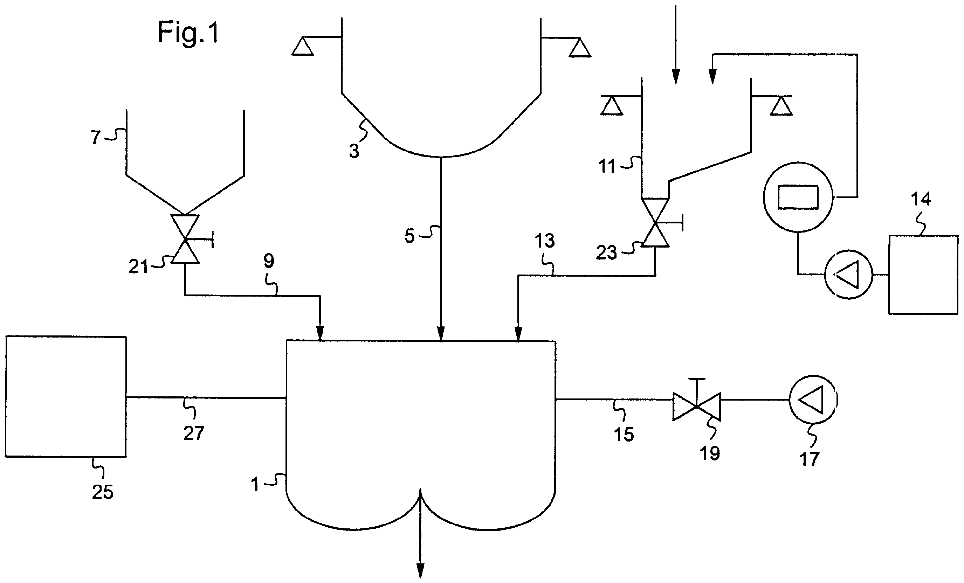

La figure 1 représente schématiquement un dispositif de fabrication d'enrobés, chauds ou tièdes, selon l'invention.

De manière classique, ce dispositif comprend un dispositif de malaxage 1 dans lequel est réalisé l'enrobé par mélange de fragments solides et d'un liant. Les fragments solides comprennent essentiellement des granulats contenus dans un réservoir à granulats 3 et apportés dans le dispositif de malaxage, ou malaxeur 1, par l'intermédiaire d'un conduit représenté schématiquement sur la figure 1 par la flèche 5. Typiquement, le transport des granulats du réservoir 3 au malaxeur 1 se fait sous l'effet du poids des granulats (vidange gravitaire du réservoir 3), c'est-à-dire que le réservoir 3 est disposé à une hauteur supérieure du dispositif de malaxage 1. Le transport pourrait également être assuré par l'intermédiaire d'une vis sans fin.

Le mélange peut en outre comporter des fillers d'apport dans un réservoir de fillers 7 et acheminés dans le dispositif de malaxage 1 par un conduit 9. Les fillers, encore appelés "fines", sont des fragments solides présentant une faible granularité, typiquement inférieure à 80 micromètres. Le transport des fillers du réservoir 7 au malaxeur 1 se fait sous l'effet du poids, ou encore par l'intermédiaire d'une vis sans fin.

L'enrobé est réalisé par l'ajout d'un liant stocké dans un réservoir de liant 11 et relié au dispositif de malaxage par un conduit 13. En particulier, le liant peut se présenter sous la forme de bitume. Parallèlement au remplissage du réservoir 3, il est possible d'ajouter un additif stocké dans un réservoir d'additif 14 présenté sur la figure 1.

Le transport dudit bitume du réservoir 11 au dispositif de malaxage 1 se fait également sous l'effet du poids, ou encore par l'intermédiaire d'une pompe de transfert.

En option, le dispositif comprend une conduite d'eau 15 débouchant dans le malaxeur 1. L'acheminement de l'eau dans le malaxeur 1 est réalisé au moyen d'une pompe 17 et d'une vanne 19 et en option d'un réservoir de dosage d'eau. La pompe 17 peut être commandée électriquement ou par l'automatisme de pilotage du dispositif de malaxage 1.

De la même manière, les réservoirs 7 et 11, et/ou les conduits 9 et 13, peuvent présenter des robinets 21 et 23 respectivement commandant, en mode "tout ou rien" ou en débit régulé, l'apport de fillers et de bitume dans le malaxeur 1. En particulier, les robinets 21 et 23 peuvent être commandés électriquement.

Le dispositif selon l'invention de la figure 1 se distingue des dispositifs classiques, en particulier en ce qu'il comprend en outre un équipement de traitement de dégagements gazeux 25 relié au malaxeur 1 par un conduit 27 capable d'acheminer des dégagements gazeux, par exemple de la vapeur, se dégageant à l'intérieur du malaxeur 1 jusqu'à l'équipement de traitement de dégagements gazeux 25.

En particulier, ces dégagements gazeux surviennent lorsque le mélange qui s'y trouve est à une température supérieure à 100°C. En présence d'eau, ces dégagements gazeux sont principalement composés de vapeur d'eau.

Par vapeur, on entend la vapeur d'eau au sens habituel du terme mais également toutes les substances en suspension dans cette vapeur, en particulier les fillers.

Cette eau peut être apportée sous forme d'eau liquide à proprement parler, par le conduit 15 par exemple, ou lorsque l'un des ingrédients est humide.

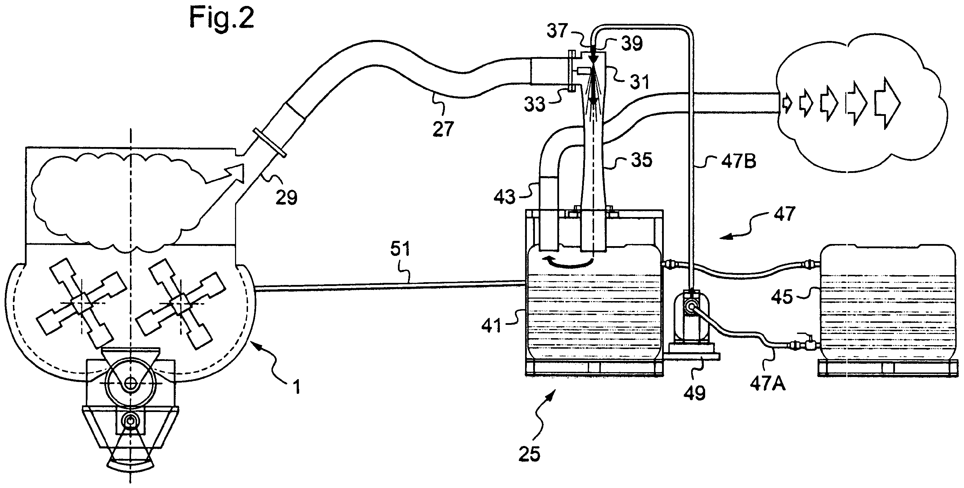

La figure 2 détaille le malaxeur 1, l'équipement de traitement de dégagements gazeux 25 et le conduit 27.

En partie haute du malaxeur 1 est prévue une cheminée 29 par laquelle peut s'échapper la vapeur d'eau formée dans le malaxeur 1. La cheminée 29 est reliée au conduit 27.

Le dispositif de traitement de dégagements gazeux 25 comprend un organe d'aspiration 31 relié au conduit 27 et agencé de manière à d'aspirer le dégagement gazeux formé dans le malaxeur 1. L'organe d'aspiration 31 est réalisé sous la forme d'un éjecteur. De fait, l'organe 31 est capable d'aspirer non seulement la vapeur, ou tout autre corps de forme gazeuse, mais également des substances liquides et solides telles que des poudres, des granulés et de la poudre.

L'éjecteur est de type dit "éjecteur à jet de liquide". Un éjecteur à jet de liquide fonctionne de manière statique. Un tel éjecteur est capable de réaliser un vide dans une enceinte qui correspond à la pression d'aspiration envisagée. Typiquement, dans l'application envisagée, la cette pression d'aspiration est voisine de 5 mbars. L' éjecteur 31 comprend une entrée de gaz 33 reliée à une tuyère de type convergente 35.

En outre, l'équipement de traitement comprend un organe de lavage de gaz 37 agencé de manière à laver, purifier, neutraliser les dégagements gazeux formés dans le malaxeur 1, au moyen d'un liquide de lavage. Dans le cas présent, le liquide de lavage envisagé est de l'eau, mais l'utilisation d'additifs ou d'autres liquides n'est, a priori, pas exclue.

L'organe d'aspiration et l'organe de lavage sont réalisés sous la forme d'une même entité désignée "laveur de gaz". Pour se faire, l'éjecteur est pourvu au voisinage de l'entrée de gaz 33 d'une entrée de liquide de lavage 39, le cas échéant munie d'une buse de pulvérisation non représentée. L'entrée de liquide de lavage est agencée de manière à arroser sensiblement l'ensemble de la tuyère 35. Le gaz entrant par l'entrée 33 est ainsi mis en contact avec le liquide de lavage.

Le produit de cette mise en contact est récupéré dans un organe de décantation 41 dans lequel débouche la tuyère 35. L'organe de décantation 41 est ici réalisé sous la forme d'une cuve fermée. En sa partie supérieure, l'organe de décantation 41 est pourvu d'une cheminée 43 qui peut être reliée à l'atmosphère ambiante ou encore dirigée vers l'entrée d'un filtre d'un équipement de séchage des fragments solides, par laquelle s'échappe une partie de la vapeur lavée. Le liquide lavage souillé est récupéré dans l'organe de décantation.

Dans un mode de réalisation préféré, on prévoit, en plus de l'organe de décantation 41, un réservoir de liquide de lavage 45 relié à l'organe de décantation, en sa partie supérieur. Le réservoir peut ainsi récupérer une partie du liquide de lavage située en partie haute de l'organe de décantation, c'est-à-dire d'une partie dépourvue des éléments solides les plus lourds contenus dans les dégagements gazeux d'entrée, lesquels se sont déposés en partie basse de l'organe de décantation 41.

Le réservoir 45 est en outre relié à l'entrée le liquide de lavage 37 par l'intermédiaire d'une conduite 47 et sous l'effet d'une pompe 49. Ici, la conduite 47 est composée en deux parties : une partie assez flexible 47A reliant le réservoir 45 à la pompe 49 et une partie rigide 47B à la manière d'une douche.

Le réservoir 45 est ici réalisé sous la forme d'une cuve fermée. Le dispositif décrit permet d'aspirer les dégagements gazeux an niveau du malaxeur 1 et de séparer les dégagements gazeux en une fraction de substances en suspension et une fraction gazeuse.

On s'intéresse maintenant à des procédés pour fabriquer un enrobé. La fabrication d'un enrobé consiste principalement à enrober des fragments solides d'un liant.

Typiquement, la fabrication de l'enrobé comprend au moins une étape consistant à élever à une température supérieure à 100°C, au moins une partie des fragments solides.

Selon l'invention, la fabrication de l'enrobé comprend une étape consistant à capter au moins en partie les dégagements gazeux fermés lors de l'élévation de température, suivie d'une étape consistant à séparer les dégagements gazeux en une fraction de substances en suspension et en une fraction gazeuse.

En particulier, l'étape de captage des dégagements gazeux consiste en une aspiration de ces dégagements. Dans le cas particulier où un malaxeur est utilisé, cette aspiration est de préférence réalisée au niveau dudit malaxeur.

L'aspiration est réalisée à l'aide d'un venturi comme sur la figure 2.

L'étape de séparation est réalisée en mettant les dégagements gazeux en contact avec un liquide de lavage. Typiquement, le liquide de lavage considéré aujourd'hui consiste principalement en de l'eau mais d'autres liquides, en particulier des solvants, pourraient également être envisagés.

On prévoit ensuite la récupération du produit issu de la mise en contact du liquide de lavage et des dégagements gazeux et la mise en oeuvre d'une étape de décantation provoquant la séparation des substances en suspension les plus lourdes. Les substances en suspension sont ainsi dissoutes dans l'eau tandis que la fraction gazeuse peut être soit rejetée dans l'atmosphère ambiante, soit réutilisée à une étape du procédé, comme on le verra plus loin. Le liquide de lavage récupéré lors de la décantation peut être réutilisé pour "laver" de nouveau les dégagements gazeux en mettant en oeuvre un circuit de circulation de liquide de lavage. Les substances en suspension décantées peuvent être réinjectées dans le malaxeur par l'intermédiaire d'un conduit de réinjection 51.

Selon une première variante du procédé, de l'eau est ajoutée à une première partie du mélange de fragments solides tandis qu'une seconde partie du mélange de fragments solides est en parallèle enrobée de liant. Le liant utilisé ici est de préférence anhydre. Le mélange de ladite première partie, sensiblement à température ambiante, à ladite seconde partie, à une température supérieure à 100°C (typiquement au-dessus de 130°C) provoque la formation de vapeur d'eau.

Cette vapeur d'eau comprend différentes substances en suspension, en particulier des fines. Autrement dit, les dégagements gazeux consécutifs à l'élévation de la température sont ici principalement composés de vapeur dans laquelle des fines sont en suspension. Le traitement de cette vapeur, conformément à l'invention, consiste à aspirer cette vapeur, à la mettre en contact avec le liquide de lavage et à faire décanter le produit ainsi obtenu de manière à séparer la vapeur et les fines. En option, les fines ainsi obtenues peuvent être réutilisées en tant que fragments solides.

Selon une seconde variante du procédé, de l'eau est ajoutée à une première partie du mélange de fragments solides, à température ambiante. Cette première partie est ensuite ajoutée à une seconde partie du mélange de fragments solides, à une température supérieure à 100°C (typiquement au-dessus de 130°C). Ceci provoque un début de formation de vapeur d'eau. L'enrobage de la totalité du mélange de granulats est réalisé après cet ajout. La formation de vapeur d'eau se poursuit au cours de l'enrobage. Cette vapeur, chargée de substances en suspension, est traitée, conformément à l'invention, de la manière indiquée plus haut.

Selon une troisième variante du procédé, de l'eau à température ambiante est ajoutée à la totalité du mélange de fragments solides, à une température proche de 100°C, typiquement voisine de 105°C. Ceci provoque un début de formation de vapeur d'eau. L'enrobage de la totalité du mélange de fragments solides humides par un liant anhydre chaud à une température généralement supérieure à 100 °C est réalisé après cette adjonction d'eau. Cette formation de vapeur d'eau se poursuit lors de l'enrobage.

Conformément à l'invention, cette vapeur d'eau est traitée de la manière indiquée plus haut.

Selon une quatrième variante du procédé, la totalité du mélange de fragments solides est à une température proche de 100°C, typiquement voisine de 105°C. L'enrobage de la totalité du mélange de fragments solides, qui peuvent être sensiblement humides, est réalisé avec un liant humide, en particulier sous forme d'émulsion ou de mousse, à température typiquement inférieure à 100°C. Autrement dit, le liant comporte de l'eau. Ceci provoque une formation de vapeur d'eau qui se charge notamment en fines et qui est traitée de la manière indiquée plus haut.

Selon une cinquième variante du procédé, une partie des fragments solides est séchée avant enrobage et la vapeur dégagée au moment du séchage est traitée de la manière indiquée plus haut.

Selon une sixième variante du procédé, une partie des fragments solides utilisés comprennent des fragments recyclés. Comme expliqué dans la partie introductive de la présente demande, ces fragments peuvent contenir une certaine quantité d'eau qui se vaporise en présence de liant chaud. Selon l'invention, la vapeur ainsi formée est traitée de la manière indiquée plus haut.

Selon une septième variante du procédé, une partie des fragments solides utilisés comprend une poudre dans les particules de laquelle est emprisonnée de l'eau sous forme cristallisée. Toute élévation de température de cette poudre à une température supérieure à 100°C provoque la formation de vapeur d'eau qui doit être traitée de la manière décrite ci-dessus.

On remarquera que lorsque le liant doit être utilisé à une température supérieure à 100°C, on pourra préférer un liant de type anhydre tandis que pour une température inférieure un liant de type humide pourra être avantageusement utilisé.

Dans les variantes 1 à 4 décrites ci-dessus, la vapeur d'eau est formée à une température assez faible. Par température assez faible, on entend une température sensiblement inférieure à 160°C et de préférence voisine ou inférieure à 130°C. En conséquence, la vapeur formée se trouve à une température proche du point de rosée. Ainsi, cette vapeur a tendance à se condenser sur les différentes parois rencontrées. Ceci rend particulièrement avantageux le procédé selon l'invention dans lequel la vapeur est aspirée et mise en contact avec du liquide de lavage par rapport aux procédés classiques consistant en un filtrage. Le filtrage de la vapeur à la température considérée provoquerait la formation de boue sur les filtres, les rendant inefficaces.

Le procédé et le dispositif selon l'invention sont particulièrement adaptés au traitement de cette vapeur "tiède" car l'équipement de captage de la vapeur est conçu sans pièces en mouvement, donc idéale pour aspirer de la vapeur pourvue ou non de fines . Le mécanisme d'aspiration est basé sur un principe hydraulique donc adéquate pour abattre cette vapeur pourvue ou non de fines.

Pour autant, le procédé selon l'invention ne se limite pas à ces variantes. Dans le cas d'une vapeur plus chaude ou d'absence de vapeur d'eau, il est malgré tout nécessaire de traiter les dégagements gazeux/la vapeur. Et le procédé selon l'invention réalise un tel traitement de manière avantageuse en ce que les substances en suspension sont "fixées" dans le liquide de lavage et non rejetées comme c'est le cas lorsqu'elles sont de taille suffisamment réduite pour passer à travers le système de filtres. En outre, ce procédé évite l'encrassement des filtres des procédés classiques.

Le dispositif 1 et le procédé peuvent donc être appliqués au cas d'enrobés chaud tels que définis dans l'introduction de la présente.

Le dispositif 1 décrit ici est de type dit "discontinu". On entend par là que l'enrobé est produit en quantités successives. L'invention peut être appliquée à un dispositif fonctionnant en continu, dont on comprend que l'enrobé y est produit en quantité assez constante dans le temps.

Le dispositif selon l'invention est tout particulièrement adapté à la mise en oeuvre du procédé décrit ci-dessus.

L'étape d'élévation de la température a été précisée comme survenant à une température supérieure à 100°C. On comprend que dans certains cas, cette température est en rapport avec la température de vaporisation de l'eau, laquelle dépend notamment des conditions de pression et est donc susceptible de varier légèrement sans pour autant remettre en cause la portée du procédé selon l'invention. Par exemple, dans des conditions de pression particulières, ladite température peut être voisine de 90°C.

## Revendications

1. Procédé pour fabriquer un enrobé comprenant des fragments solides enrobés d'un liant, dans lequel la fabrication de l'enrobé comprend :
a) une étape d'élévation à une température supérieure à 100°C d'une partie au moins des fragments solides, en présence d'eau ;
b) une étape de captage de dégagements gazeux consécutifs à l'étape a), et
c) une étape de séparation desdits dégagements gazeux en une fraction de substances en suspension et en une fraction gazeuse,
l'étape b) comprenant :
b1) une étape d'aspiration des dégagements gazeux au moyen d'un organe d'aspiration (31) ; et l'étape c) comprenant:
c1) une étape de mise en contact des dégagements gazeux avec un liquide de lavage au moyen d'un organe de lavage (37); **caractérisé en ce que**:
l'organe d'aspiration (31) est réalisé sous forme d'un éjecteur (31) à jet liquide comprenant une entrée de gaz (33) reliée à une tuyère de type convergente (35), l'éjecteur étant pourvu au voisinage de l'entrée de gaz (33) d'une entrée de liquide de lavage (39) agencée de manière à arroser sensiblement l'ensemble de la tuyère (35), de sorte que l'organe d'aspiration (31) et l'organe de lavage (37) sont réalisés sous la forme d'une même entité, désignée laveur de gaz.

2. Procédé selon la revendication 1, dans lequel l'étape c) comprend en outre les étapes suivantes :
c2) récupération d'un produit de l'étape c1), et
c3) décantation de ce produit.

3. Procédé selon l'une des revendications 1 et 2, dans lequel le liquide de lavage comprend de l'eau à l'état liquide.

4. Procédé selon l'une des revendications précédentes, dans lequel l'étape a) comprend le mélange d'une première partie des fragments solides humides à une seconde partie des fragments solides à une température supérieure à 100°C.

5. Procédé selon la revendication 4, dans lequel l'étape a) comprend l'ajout de liant à ladite seconde partie seulement des fragments solides et l'adjonction d'eau à la première partie des fragments solides.

6. Procédé selon l'une des revendications précédentes, dans lequel l'étape a) comprend l'ajout d'eau à une partie au moins des fragments solides à température ambiante, l'étape a) comprenant en outre l'ajout de liant.

7. Procédé selon l'une des revendications précédentes, lorsque dépendante de la revendication 2, dans lequel l'étape c) comprend en outre une étape de réinjection de substances en suspension décantées.

8. Procédé selon l'une des revendications précédentes, dans lequel l'étape a) comprend une étape de mélange d'une partie au moins des fragments solides humides à un liant anhydre à une température supérieure à 100°C.

9. Procédé selon l'une des revendications précédentes, dans lequel l'étape a) comprend une étape de mélange d'une partie au moins des fragments solides à une température supérieure à 100°C à un liant humide.

10. Procédé selon l'une des revendications précédentes, dans lequel l'étape a) comprend une étape d'adjonction d'eau aux fragments solides à une température voisine de 100°C.

11. Procédé selon l'une des revendications précédentes **caractérisé en ce que** lesdites substances en suspension comprennent des fines.

12. Procédé selon l'une des revendications précédentes, **caractérisé en ce qu'**il comprend en outre l'étape suivante :
d) injection d'une partie au moins de ladite fraction de substances en suspension en tant que fragments solides.

13. Procédé selon l'une des revendications précédentes, **caractérisé en ce qu'**à l'étape b1), les dégagements gazeux comprennent de la vapeur d'eau formée à une température voisine ou inférieure à 130°C.

14. Dispositif pour fabriquer un enrobé comprenant des fragments solides enrobés d'un liant, comprenant au moins un poste de malaxage (1) des fragments solides, un poste de traitement de dégagements gazeux (25) relié au poste de malaxage et agencé de manière à capter, au moins en partie, lesdits dégagements gazeux et à séparer certaines au moins des substances en suspension dans lesdits dégagements gazeux, le poste de traitement de dégagements gazeux (25) comprenant un organe d'aspiration (31) relié au poste de malaxage (1) de manière à aspirer au moins une partie des dégagements gazeux contenus dans le poste de malaxage (1) et un organe de lavage de gaz (37) agencé de manière à mettre en contact un liquide de lavage avec les dégagements gazeux, ainsi qu'un organe de décantation (41) agencé de manière à récupérer au moins en partie le produit de la mise en contact du liquide de lavage et des dégagements gazeux, **caractérisé en ce que** l'organe d'aspiration est réalisé sous forme d'un éjecteur (31) à jet liquide comprenant une entrée de gaz (33) reliée à une tuyère de type convergente (35), l'éjecteur étant pourvu au voisinage de l'entrée de gaz (33) d'une entrée de liquide de lavage (39) agencée de manière à arroser sensiblement l'ensemble de la tuyère (35), de sorte que l'organe d'aspiration (31) et l'organe de lavage (37) sont réalisés sous la forme d'une même entité, désignée laveur de gaz.

15. Dispositif selon la revendication 14, dans lequel l'organe de décantation (41) comprend un réservoir sensiblement fermé.

16. Dispositif selon l'une des revendications 14 et 15, dans lequel l'organe de décantation (41) comprend en outre un évent canalisé (43).

17. Dispositif selon l'une des revendications 14 à 16, dans lequel l'organe de décantation (41) est relié au poste de malaxage (1) de manière à injecter au moins une partie des substances captées par le poste de traitement (25) des dégagements gazeux.

18. Dispositif selon l'une des revendications 14 à 17, dans lequel l'organe de lavage de gaz (37) comprend un appareil du type laveur venturi.

19. Dispositif selon l'une des revendications 14 à 18, dans lequel le poste de malaxage (1) comporte au moins un élément du groupe formé d'une entrée de fines, une entrée de fragments solides, une arrivée de liant et une arrivée d'eau.

20. Poste de traitement de dégagements gazeux comprenant un organe de lavage de gaz (37) agencé de manière à mettre en contact un liquide de lavage avec des dégagements gazeux, ainsi qu'un organe de décantation (41) agencé de manière à récupérer au moins en partie le produit de la mise en contact du liquide de lavage et des dégagements gazeux, le poste de traitement de dégagements gazeux (25) comprend un organe d'aspiration (31) reliable à un poste de malaxage (1) de manière à aspirer au moins une partie des dégagements gazeux contenus dans le poste de malaxage (1), **caractérisé en ce que** l'organe d'aspiration est réalisé sous forme d'un éjecteur (31) à jet liquide comprenant une entrée de gaz (33) reliée à une tuyère de type convergente (35), l'éjecteur étant pourvu au voisinage de l'entrée de gaz (33) d'une entrée de liquide de lavage (39) agencée de manière à arroser sensiblement l'ensemble de la tuyère (35), de sorte que l'organe d'aspiration (31) et l'organe de lavage (37) sont réalisés sous la forme d'une même entité, désignée laveur de gaz.

## Patentansprüche

1. Verfahren zur Herstellung eines Mischguts umfassend Feststofffragmente, die mit einem Bindemittel umhüllt sind, wobei die Herstellung des Mischguts umfasst:
a) einen Schritt zur Erhöhung auf eine Temperatur von über 100 °C von mindestens einem Teil der Feststofffragmente in Gegenwart von Wasser;
b) einen Schritt zum Auffangen von Abgasen nach Schritt a), und
c) einen Schritt zur Trennung der Abgase in eine Schwebstofffraktion und eine Gasfraktion,
wobei Schritt b) umfasst:
b1) einen Schritt zur Ansaugung der Abgase mittels eines Ansaugelements (31); und
wobei Schritt c) umfasst:
c1) einen Schritt zum Kontaktieren der Abgase mit einer Waschflüssigkeit mittels eines Waschelements (37);
**dadurch gekennzeichnet, dass:**
das Ansaugelement (31) in Form eines Flüssigkeitsstrahl-Ejektors (31) ausgebildet ist, der einen mit einer konvergenten Düse (35) verbundenen Gaseinlass (33) umfasst,
wobei der Ejektor in der Nähe des Gaseinlasses (33) mit einem Waschflüssigkeitseinlass (39) bereitgestell: ist, der so angeordnet ist, dass er im Wesentlichen die gesamte Düse (35) benetzt, so dass das Ansaugelement (31) und das Waschelement (37) als eine einzige Einheit realisiert sind, die als Gaswäscher bezeichnet wird.

2. Verfahren nach Anspruch 1, wobei Schritt c) ferner die folgenden Schritte umfasst:
c2) Rückgewinnung eines Produktes aus Schritt c1), und
c3) Dekantierung dieses Produkts.

3. Verfahren nach einem der Ansprüche 1 und 2, wobei die Waschflüssigkeit Wasser in flüssigem Zustand umfasst.

4. Verfahren nach einem der vorstehenden Ansprüche, wobei Schritt a) das Mischen eines ersten Teils der feuchten Feststofffragmente mit einem zweiten Teil der Feststofffragmente bei einer Temperatur über 100 °C umfasst.

5. Verfahren nach Anspruch 4, wobei Schritt a) die Zugabe von Bindemittel nur zu dem zweiten Teil der Feststofffragmente und die Zugabe von Wasser zu dem ersten Teil der Feststofffragmente umfasst.

6. Verfahren nach einem der vorstehenden Ansprüche, wobei Schritt a) die Zugabe von Wasser zu mindestens einem Teil der Feststofffragmente bei Umgebungstemperatur umfasst, wobei Schritt a) ferner die Zugabe von Bindemittel umfasst.

7. Verfahren nach einem der vorstehenden Ansprüche in Abhängigkeit von Anspruch 2, wobei Schritt c) ferner einen Schritt zur Reinjektion von dekantierten Schwebstoffen umfasst.

8. Verfahren nach einem der vorstehenden Ansprüche, wobei Schritt a) einen Schritt zum Mischen von mindestens einem Teil der feuchten Feststofffragmente mit einem wasserfreien Bindemittel bei einer Temperatur über 100 °C umfasst.

9. Verfahren nach einem der vorstehenden Ansprüche, wobei Schritt a) einen Schritt zum Mischen von mindestens einem Teil der Feststofffragmente bei einer Temperatur über 100 °C mit einem feuchten Bindemittel umfasst.

10. Verfahren nach einem der vorstehenden Ansprüche, wobei Schritt a) einen Schritt zur Zugabe von Wasser zu den Feststofffragmenten bei einer Temperatur von etwa 100 °C umfasst.

11. Verfahren nach einem der vorstehenden Ansprüche **dadurch gekennzeichnet, dass** die Schwebstoffe Feinstoffe umfassen.

12. Verfahren nach einem der vorstehenden Ansprüche, **dadurch gekennzeichnet, dass** es ferner den folgenden Schritt umfasst:
d) Injektion von mindestens einem Teil der Schwebstofffraktion als Feststofffragmente.

13. Verfahren nach einem der vorstehenden Ansprüche, **dadurch gekennzeichnet, dass** in Schritt b1), die Abgase Wasserdampf umfassen, der bei einer Temperatur von etwa 130 °C oder weniger gebildet wird.

14. Vorrichtung zur Herstellung eines Mischguts, umfassend Feststofffragmente, die mit einem Bindemittel umhüllt sind, umfassend mindestens eine Station zum Mischen (1) der Feststofffragmente, eine Station zur Behandlung von Abgasen (25), die mit der Mischstation verbunden und so angeordnet ist, dass sie die Abgase mindestens teilweise auffängt und mindestens einige Schwebstoffe in den Abgasen trennt, wobei die Abgasbehandlungsstation (25) ein Ansaugelement (31), das mit der Mischstation (1) verbunden ist, um mindestens einen Teil der in der Mischstation (1) enthaltenen Abgase anzusaugen, und ein Gaswaschelement (37), das so angeordnet ist, dass es eine Waschflüssigkeit mit den Abgasen in Kontakt bringt, sowie ein Dekantierelement (41), das so angeordnet ist, dass es mindestens teilweise das Produkt des Kontakts zwischen der Waschflüssigkeit und den Abgasen zurückgewinnt, umfasst, **dadurch gekennzeichnet, dass** das Ansaugelement in Form eines Flüssigkeitsstrahl-Ejektors (31) ausgebildet ist, der einen mit einer konvergenten Düse (35) verbundenen Gaseinlass (33) umfasst,
wobei der Ejektor in der Nähe des Gaseinlasses (33) mit einem Waschflüssigkeitseinlass (39) bereitgestellt ist, der so angeordnet ist, dass er im Wesentlichen die gesamte Düse (35) benetzt, wobei das Ansaugelement (31) und das Waschelement (37) als eine Einheit realisiert sind, die als Gaswäscher bezeichnet wird.

15. Vorrichtung nach Anspruch 14, wobei das Dekantierelement (41) ein im Wesentlichen geschlossenes Reservoir umfasst.

16. Vorrichtung nach einem der Ansprüche 14 und 15, wobei das Dekantierelement (41) ferner eine kanalisierte Entlüftung (43) umfasst.

17. Vorrichtung nach einem der Ansprüche 14 bis 16, wobei das Dekantierelement (41) mit der Mischstation (1) so verbunden ist, dass mindestens ein Teil der von der Abgasbehandlungsstation (25) aufgefangenen Substanzen injiziert werden.

18. Vorrichtung nach einem der Ansprüche 14 bis 17, wobei das Gaswaschelement (37) eine Vorrichtung vom Typ eines Venturiwäschers umfasst.

19. Vorrichtung nach einem der Ansprüche 14 bis 18, wobei die Mischstation (1) mindestens ein Element aus der Gruppe bestehend aus einem Feinstoffeinlass, einem Feststofffragmenteinlass, einem Bindemittelzufluss und einem Wasserzufluss umfasst.

20. Abgasbehandlungsstation, umfassend ein Gaswaschelement (37), das so angeordnet ist, dass es eine Waschflüssigkeit mit Abgasen in Kontakt bringt, und ein Dekantierelement (41), das so angeordnet ist, dass es mindestens teilweise das Produkt des Kontakts zwischen der Waschflüssigkeit und den Abgasen zurückgewinnt, wobei die Abgasbehandlungsstation (25) ein Ansaugelement (31), das mit einer Mischstation (1) so verbindbar ist, dass mindestens ein Teil der in der Mischstation (1) enthaltenen Abgase angesaugt werden, umfasst, **dadurch gekennzeichnet, dass** das Ansaugelement in Form eines Flüssigkeitsstrahl-Ejektors (31) ausgebildet ist, der einen mit einer konvergenten Düse (35) verbundenen Gaseinlass (33) umfasst,
wobei der Ejektor in der Nähe des Gaseinlasses (33) mit einem Waschflüssigkeitseinlass (39) bereitgestellt ist, der so angeordnet ist, dass er im Wesentlichen die gesamte Düse (35) benetzt, wobei das Ansaugelement (31) und das Waschelement (37) als eine Einheit realisiert sind, die als Gaswäscher bezeichnet wird.

## Claims

1. Method for manufacturing a coated aggregate comprising solid fragments coated with a binder, wherein the manufacturing of the coated aggregate comprises:
a) a step of elevating to a temperature greater than 100°C of a portion at least of the solid fragments, in the presence of water;
b) a step of capturing off-gases resulting from step a), and
c) a step of separating said off-gases into a suspended substance fraction and into a gaseous fraction,
step b) comprising:
b1) a step of sucking off-gases by means of a suction member (31); and step c) comprising:
c1) a step of putting the off-gases into contact with a scrubbing liquid by means of a scrubbing member (37);
**characterised in that**:
the suction member (31) is made in the form of a liquid jet ejector (31) comprising a gas inlet (33) connected to a nozzle of the converging type (35), the ejector being provided in the vicinity of the gas inlet (33) with a scrubbing liquid inlet (39) arranged in such a way as to substantially spray the entire nozzle (35), so that the suction member (31) and the scrubbing member (37) are made in the form of the same entity, called a gas scrubber.

2. Method according to claim 1, wherein step c) further comprises the following steps:
c2) recovering a product from step c1), and
c3) decanting this product.

3. Method according to one of claims 1 and 2, wherein the scrubbing liquid comprises water in the liquid state.

4. Method according to one of the preceding claims, wherein step a) comprises mixing a first portion of the wet solid fragments with a second portion of the solid fragments at a temperature greater than 100°C.

5. Method according to claim 4, wherein step a) comprises adding a binder to said second portion only of solid fragments and adding water to the first portion of the solid fragments.

6. Method according to one of the preceding claims, wherein step a) comprises adding of water to a portion at least of the solid fragments at room temperature, step a) further comprising adding a binder.

7. Method according to one of the preceding claims, when dependent on claim 2, wherein step c) further comprises a step of reinjecting decanted suspended substances.

8. Method according to one of the preceding claims, wherein step a) comprises a step of mixing a portion at least of the wet solid fragments with an anhydrous binder at a temperature higher than 100°C.

9. Method according to one of the preceding claims, wherein step a) comprises a step of mixing a portion at least of the solid fragments at a temperature greater than 100°C with a wet binder.

10. Method according to one of the preceding claims, wherein step a) comprises a step of adding water to the solid fragments at a temperature in the vicinity of 100°C.

11. Method according to one of the preceding claims **characterised in that** said suspended substances comprise fines.

12. Method according to one of the preceding claims, **characterised in that** it further comprises the following step:
d) injecting a portion at least of said suspended substance fraction as solid fragments.

13. Method according to one of the preceding claims, **characterised in that** in step b1), the off-gases comprise water vapour formed at a temperature in the vicinity of or less than 130°C.

14. Device for manufacturing a coated aggregate comprising solid fragments coated with a binder, comprising at least one solid fragment mixing station (1), an off-gas treatment station (25) connected to the mixing station and arranged in such a way as to capture, at least in part, said off-gases and to separate some at least of the suspended substances in said off-gases, the off-gas treatment station (25) comprising a suction member (31) connected to the mixing station (1) in such a way as to suck at least one portion of the off-gases contained in the mixing station (1) and a gas scrubbing member (37) arranged in such a way as to put a scrubbing liquid in contact with the off-gases, as well as a decanting member (41) arranged in such a way as to recover at least in part the product from the putting into contact of the scrubbing liquid and the off-gases, **characterised in that** the suction member is made in the form of a liquid jet ejector (31) comprising a gas inlet (33) connected to a nozzle of the converging type (35), the ejector being provided in the vicinity of the gas inlet (33) with a scrubbing liquid inlet (39) arranged in such a way as to substantially spray the entire nozzle (35), so that the suction member (31) and the scrubbing member (37) are made in the form of the same entity, called a gas scrubber.

15. Device according to claim 14, wherein the decanting member (41) comprises a substantially closed reservoir.

16. Device according to one of claims 14 and 15, wherein the decanting member (41) further comprises a channelled vent (43).

17. Device according to one of claims 14 to 16, wherein the decanting member (41) is connected to the mixing station (1) in such a way as to inject at least one portion of the substances captured by the off-gas treatment station (25).

18. Device according to one of claims 14 to 17, wherein the gas scrubbing member (37) comprises an apparatus of the Venturi scrubber type.

19. Device according to one of claims 14 to 18, wherein the mixing station (1) comprises at least one element from the group comprising a fines inlet, a solid fragment inlet, a binder inlet and a water inlet.

20. Off-gas treatment station comprising a gas scrubbing member (37) arranged in such a way as to put a scrubbing liquid in contact with off-gases, as well as a decanting member (41) arranged in such a way as to recover at least in part the product from the putting into contact of the scrubbing liquid and off-gases, the off-gas treatment station (25) comprises a suction member (31) that can be connected to a mixing station (1) in such a way as to suck at least one portion of the off-gases contained in the mixing station (1), **characterised in that** the suction member is made in the form of a liquid jet ejector (31) comprising a gas inlet (33) connected to a nozzle of the converging type (35), the ejector being provided in the vicinity of the gas inlet (33) with a scrubbing liquid inlet (39) arranged in such a way as to substantially spray the entire nozzle (35), so that the suction member (31) and the scrubbing member (37) are made in the form of the same entity, called a gas scrubber.
